# EUROPEAN PATENT APPLICATION

(11) **EP 2 836 018 A1**
(43) Date of publication of application: **11.02.2015**
(21) Application number: 13360019.7
(22) Date of filing: 09.08.2013
(51) Int. Cl.: H04W 36/22, H04W 36/14, H04W 88/06

(54) **Traffic steering by cellular radio access network (RAN) in a network supporting Access Network Discovery and Selection Function (ANDSF)**

(71) Applicant: ALCATEL LUCENT, 92100 Boulogne-Billancourt (FR)
(72) Inventor: Puddle, Nicola, Swindon SN5 7DJ (GB); Palat, Sudeep K., Swindon SN5 7DJ (GB); Worrall, Chandrika K., Swindon SN5 7DJ (GB); Lim, Seau Sian, Swindon SN5 7DJ (GB)
(74) Representative: Greenwood, Matthew David

(57) **Abstract**

A method, in a radio telecommunication system, of interworking between different radio access networks for a user equipment (UE) capable of operating with a first radio access network and a second radio access network, wherein the UE is attached to the said first radio access network, the method comprising triggering the provision of connection policy data from the UE to the first radio access network, determining at the first radio access networkif the UE can exploit the second radio access network, and on the basis of the determination, initiating a handover to offload the UE from the first radio access network to the second radio access network.

## Description

### TECHNICAL FIELD

The disclosed embodiments relate generally to wireless network communication, and, more particularly, to multi-radio interworking in heterogeneous wireless communication networks.

### BACKGROUND

User communication devices, such as laptops, tablets, smart phones, also known as user equipment (UE) typically support multiple wireless technologies such as WIFI and Cellular Wireless Technologies such as LTE, CDMA and so on. Standard protocols, such as 3GPP, 3GPP2 and so on define control protocols by which the user equipment can select a component access technology.

Wireless LAN technologies, such as WIFI and WiMAX, are becoming increasingly available as WIFI. These services may be offered by the same operator as the wireless cell operator or by a different operator. Also, cell operators are deploying micro and femto cells in certain locations to increase the capacity and coverage in dense locations. Network selection in the majority of the mobile wireless devices is based on Received Signal Strength or based on the configuration of the best network in the device, and by type of service (voice or data), that the user initiates. For example, on a device that has connectivity to both a radio access network and WIFI networks, when the user initiates a circuit switched (CS) service, such as a voice call or SMS for example, the device uses the RAN. However, when the user initiates packet switched (PS) services, the device uses WLAN. If the device is currently not associated with a WIFI access point (AP), and if the WIFI radio is enabled, the device attempts to connect to the highest priority WLAN/SSID that it successfully connected to previously.

3GPP standards define Access Network Discovery and Selection (ANDSF) methods by which a mobile device identifies which access network to connect to (Network Selection and Inter System Mobility Policy), or which network to route specific IP flows to (Inter System Routing Policy). This framework uses a client application (ANDSF Client) and server (ANDSF Server) in the operator's core network. However, there is a need for a to enable enhanced operator control for WLAN interworking, and to enable WLAN to be included in an operator's cellular Radio Resource Management.

### SUMMARY

According to an example, there is provided a method, in a radio telecommunication system, of interworking between different radio access networks for a user equipment (UE) capable of operating with a first radio access network and a second radio access network, wherein the UE is attached to the said first radio access network, the method comprising triggering the provision of connection policy data from the UE to the first radio access network, determining at the first radio access network if the UE can exploit the second radio access network, and on the basis of the determination, initiating a handover to offload the UE from the first radio access network to the second radio access network. Providing the connection policy data can be triggered by the first radio access network at the request of a node of the first radio access network. Providing the connection policy data can be triggered by the UE in response to a change in operating parameters of the UE. The change in parameters can include the UE initiating a process to connect to the second radio access network. The change in parameters can include a change in the policy data. The policy data can be provided to the first radio access network periodically by UE. The policy data can be an Access network discovery and selection function (ANDSF) policy. The UE can transmit data representing a reject message to the first radio access network to reject offload to the second radio access network. The reject message can include data representing one or more of a reason for rejection and connection policy data.

According to an example, there is provided a radio telecommunication system, including a UE capable of operating with a first radio access network and a second radio access network of the system, wherein the UE is attached to the said first radio access network, the system operable to trigger the provision of connection policy data from the UE to the first radio access network, determine at the first radio access network if the UE can exploit the second radio access network, and on the basis of the determination, initiate a handover to offload the UE from the first radio access network to the second radio access network. The first radio access network can be operable to trigger the provision of the connection policy at the request of a node of the first radio access network. The UE can be operable to trigger the provision of the connection policy data in response to a change in operating parameters of the UE.

According to an example, there is provided a UE to operate with a first radio access network and a second radio access network of a radio telecommunication system, the UE operable in accordance with the method as provided above. According to an example, there is provided a UE to operate with a first radio access network and a second radio access network of a system as provided above.

According to an example, there is provided a computer program product, comprising a computer usable medium having computer readable program code embodied therein, said computer readable program code adapted to be executed to implement a method, in a radio communication system, for interworking between different radio access networks as provided above.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a schematic representation of a message sequence for an eNB/RNC initiated procedure to offload a UE to WiFi; and
Figure 3 is a flowchart depicting a method, in a radio telecommunication system, of interworking between different radio access networks for a user equipment (UE).

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

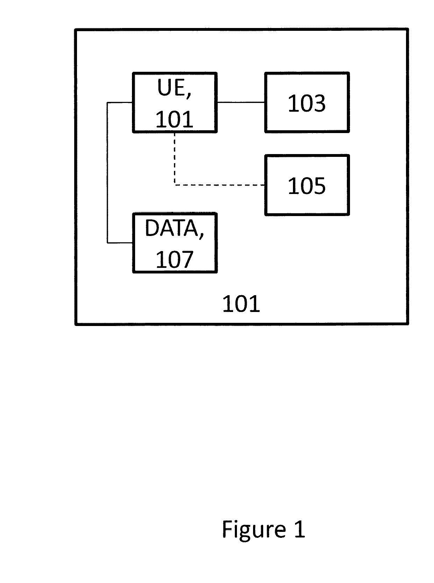

Traffic steering for UEs can be controlled by the network using dedicated traffic steering commands, potentially based also on WLAN measurements (reported by the UE). A sequence diagram for this solution is shown in Figure 1, where:
1. Measurement control: The eNB/RNC configures the UE measurement procedures including the identity of the target WLAN to be measured.
2. Measurement report: The UE is triggered to send measurement report by the rules set by the measurement control.
3. Traffic steering: The eNB/RNC sends the steering command message to the UE to perform the traffic steering based on the reported measurements and loading in the RAN.

The interaction between an ANDSF policy in the UE is typically such that traffic steering commands can override the ANDSF policy only for the traffic indicated in the command. All other traffic continues to be subject to the ANDSF policy as applicable.

Other potential interaction aspects with ANDSF provide that:
- Some information on UE-specific ANDSF configuration may be available in RAN, either provided by core network, or by O&M so that RAN can take appropriate actions;
- The UE could provide information to the RAN e.g. indicate what can be offloaded to a reported WLAN.

It may be unrealistic for the ANDSF policy information to be provided to RAN for each UE. Also, as an example for appreciating the relevance of the ANDSF policy is when a UE is roaming. In this scenario the UE is provided with an ANDSF policy from its home PLMN, when the UE roams into the visited PLMN the home PLMN ANDSF policy takes precedence and not the visited PLMN ANDSF policy. A reason for this is that the home operator may have setup a policy whereby a particular WiFi operator is preferred, possible due to cost to operator of utilising this vendor's WiFi, which may not be a preferred WiFi by the visited operator.

According to an example, an eNB/RNC can send a steering command message to a UE to perform traffic steering based on reported measurements and loading in the RAN.

The traffic steering commands can override the ANDSF policy only for the traffic indicated in the command. All other traffic continues to be subject to the ANDSF policy as applicable. Other potential interaction aspects with ANDSF may be that some information on UE-specific ANDSF configuration may be available in RAN, either provided by core network, or by O&M so that RAN can take appropriate actions, and that the UE could provide information to the RAN e.g. indicate what can be offloaded to a reported WLAN.

In an example, a method and system is provided for interworking when a UE has an ANDSF policy, and in order that the network can utilize the information in the ANDSF policy (it could also be applied when UE has a UE subscription policy). whilst not overriding the ANDSF policy, but rather work in harmony with it.

In a first example, an eNB/RNC instigates a procedure to offload a UE to WiFi, by sending a message to the UE in order for the UE to provide information on its ANDSF policy (termed Feedback, or connection policy data). One possible reason for initiating the procedure would be if the 3GPP load is high for example.

In an embodiment the Feedback information from the UE can include data representing:
a) Indication of which WiLAN APs (Access Point) in the vicinity that the UE is allowed to connect to (according to its ANDSF policy);
b) Indication of the preference of the WiLAN APs in the vicinity (according to its ANDSF policy);
c) Indication of the preference of the WiLAN APs in the vicinity per IP flow (according to its ANDSF policy);
d) Indication of 3GPP RAT preference;
e) Report of IP flows currently carried over WiLAN;
f) Empty (i.e. the UE has no ANDSF policy);
g) User preference indicating WiLAN is off (i.e user has turned WiFi operation off on the UE for example).

Where WiLAN AP could be a list of at least BSSId, HSSId and so on. The Feedback information could be contained in the measurement report, along with WiFi measurements. The RAN network can then take the Feedback information into account when determining which WiFi AP to use for the traffic steering, thereby taking the ANDSF policy information into account.

In an alternative example,a UE is triggered to provide the Feedback information when due to the ANDSF policy the UE has started selection of WiFi. The UE could also send the feedback information every time it associates with a different WiFi AP or the feedback information changes (for example, if at a particular time of day the UEs preference for a particular wiFi AP changes).

A further embodiment of this example is that the network provides an indication that the UE is allowed to send the feedback information directly to the network without the request being triggered by the network. An advantage of this option is that network is made aware that the UE has an ANDSF policy, which can be taken into account for any future traffic steering by the network.

An alternative example provides that the UE sends a reject message. If, according to the UEs ANDSF policy, the UE is not allowed to use a particular WiFi AP for some reaons, the UE returns a reject message to the network. In an embodiment the UE can provide additional information to the network on the rejection. This could be, for example the reason for rejection, and Feedback information. Providing feedback information allows the network to utilize the ANDSF policy information for the WiFi AP preference, when potentially performing the traffic steering again.

Therefore, there are provided multiple ways for a network to be provided with ANDSF policy information relating to AP preference. As the roaming users ANDSF policy may always take precedence, it would be useful to the RAN to know this information before initiating any offload procedure. In an example, this can be realized by the Core Network informing the RAN whether the UE is roaming, and this can be included in the S1 UE Context message (or for UMTS the Common Id message) for example.

This then allows the RAN to know not to initiate the offload procedure to that UE, or in an embodiment the RAN could send a message to the UE to indicate to the UE not to wait for command from eNB/RNC to move to WiFi but to use its ANDSF policy. In a further embodiment the UE could send the indication of whether it is roaming in the Feedback information.

Figure 1 is a schematic representation of a system according to an example. A UE 100 can operate with a first radio access network 103 and a second radio access network 105 of the system 101. In an example, the UE 100 is attached to the first radio access network 103, and the system 101 is operable to trigger the provision of connection policy data 107 from the UE 100 to the first radio access network 103. The data 107 can be provided from the UE in several ways. For example, the data can be effectively pulled from the UE by the system, such that there is a system driven trigger to request the date from the UE. Such a trigger can be periodic, or can be ad-hoc, perhaps on the basis of some change in the system environment or radio parameters for example. Alternatively, the data can be provided by the UE, periodically, or as a result of a change in radio parameters between the UE and one or more nodes of the system for example. further alternatively, the UE can provide a reject message to the system indicating that it cannot or will not connect to a particular radio access network, for example as a result of an overriding requirement specified in the ANDSF.

Using the policy data 107, the system determines if the UE 100 can exploit the second radio access network 105. On the basis of this determination, a handover is initiated to offload the UE 100 from the first radio access network 103 to the second radio access network 105.

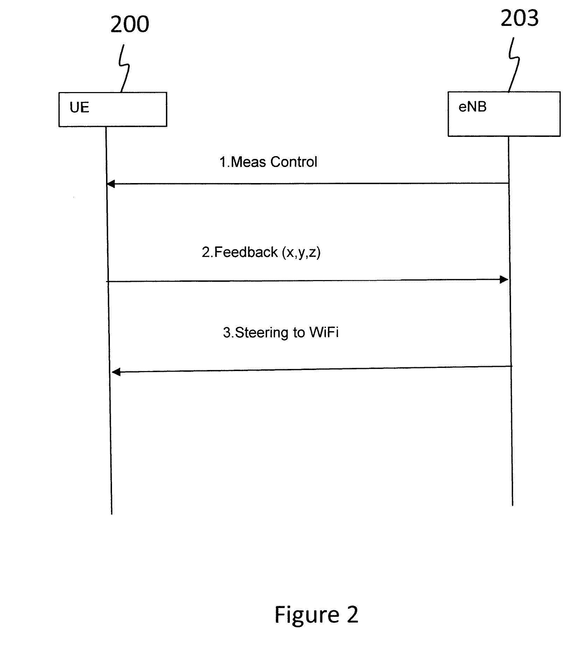

Figure 2 is a schematic representation of a message sequence for an eNB/RNC initiated procedure to offload a UE to WiFi. A network (eNB 203) sends a measurement control message to a UE 200 to get information on the UE ANDSF policy. The UE 200 sends feedback as part of a new or an existing message. The network then steers the UE 200 to a particular WiFi AP.

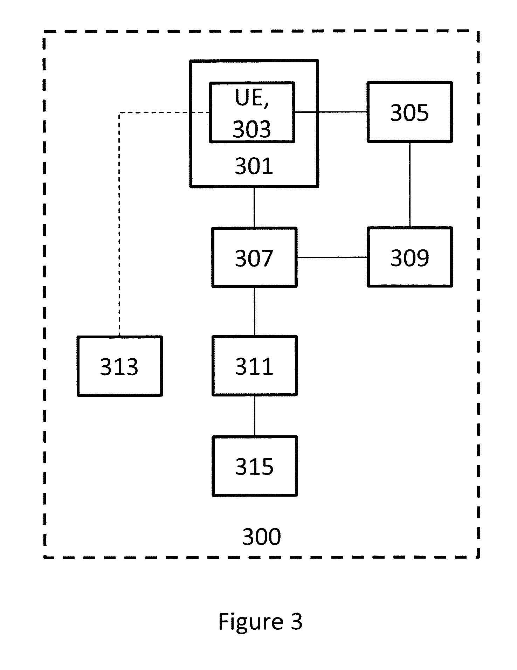

Figure 3 is a flowchart depicting a method, in a radio telecommunication system 300, of interworking between different radio access networks for a user equipment (UE) capable of operating with a first radio access network and a second radio access network. In block 301, the UE 303 is attached to the first radio access network 305. In block 307 the provision of connection policy data 309 from the UE 303 to the first radio access network 305 is triggered. At block 311 it is determined at the first radio access network 305, and on the basis of the policy data 309, if the UE 303 can exploit the second radio access network 313. On the basis of the determination, a handover to offload the UE from the first radio access network to the second radio access network is initiated in block 315.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a radio telecommunication system, of interworking between different radio access networks for a user equipment (UE) capable of operating with a first radio access network and a second radio access network, wherein the UE is attached to the said first radio access network, the method comprising:
triggering the provision of connection policy data from the UE to the first radio access network;
determining at the first radio access network if the UE can exploit the second radio access network; and
on the basis of the determination, initiating a handover to offload the UE from the first radio access network to the second radio access network.

2. A method as claimed in claim 1, wherein providing the connection policy data is triggered by the first radio access network at the request of a node of the first radio access network.

3. A method as claimed in claim 1, wherein providing the connection policy data is triggered by the UE in response to a change in operating parameters of the UE.

4. A method as claimed in claim 3, wherein the change in parameters includes the UE initiating a process to connect to the second radio access network.

5. A method as claimed in claim 3, wherein the change in parameters includes a change in the policy data.

6. A method as claimed in claim 3, wherein the policy data is provided to the first radio access network periodically by UE.

7. A method as claimed in any preceding claim, wherein the policy data is an Access network discovery and selection function (ANDSF) policy.

8. A method as claimed in claim 1, wherein the UE transmits data representing a reject message to the first radio access network to reject offload to the second radio access network.

9. A method as claimed in claim 8, wherein the reject message includes data representing one or more of a reason for rejection and connection policy data.

10. A radio telecommunication system, including a UE capable of operating with a first radio access network and a second radio access network of the system, wherein the UE is attached to the said first radio access network, the system operable to trigger the provision of connection policy data from the UE to the first radio access network;
determine at the first radio access network if the UE can exploit the second radio access network; and
on the basis of the determination, initiate a handover to offload the UE from the first radio access network to the second radio access network.

11. A system as claimed in claim 10, wherein the first radio access network is operable to trigger the provision of the connection policy at the request of a node of the first radio access network.

12. A system as claimed in claim 10, wherein the UE is operable to trigger the provision of the connection policy data in response to a change in operating parameters of the UE.

13. A UE to operate with a first radio access network and a second radio access network of a radio telecommunication system, the UE operable in accordance with the method as claimed in any of claims 1 to 9.

14. A UE to operate with a first radio access network and a second radio access network of a system as claimed in any of claims 10 to 12.

15. A computer program product, comprising a computer usable medium having computer readable program code embodied therein, said computer readable program code adapted to be executed to implement a method, in a radio communication system, for interworking between different radio access networks as claimed in any of claims 1 to 9.
